# EUROPEAN PATENT APPLICATION

(11) **EP 1 345 310 A1**
(43) Date of publication of application: **17.09.2003**
(21) Application number: 02290613.5
(22) Date of filing: 12.03.2002
(51) Int. Cl.: H02M 7/219, H02M 7/217

(54) **Transformerless ac/dc-converter**

(71) Applicant: STMicroelectronics N.V., 1077 XX Amsterdam (NL)
(72) Inventor: van den Bossche, Luc Jozef Louis, 9280 Lebbeke (BE)
(74) Representative: Van Malderen, Joelle

(57) **Abstract**

AC/DC-converters (1) comprise rectifiers (10) for rectifying AC-signals into DC-signals. By providing these AC/DC-converters (1) with voltage dividing capacitors (3,6,5) located between converter-input (12,13) and rectifier (10), the rectifier (10) can be better integrated, due to no longer receiving the entire input voltage present at the converter-input (12,13) of the AC/DC-converter (1), without a conventional transformer comprising an iron core and windings being required. Such an AC/DC-converter (1) is smal sized, of light weight and low costly made. Preferably, a resistor (2,4) is added to a voltage dividing capacitor (3,5) for filtering peak signals, the converter-input (12,13) is symmetric, said rectifier (10) comprises two diodes (20,23) and two transistors (21,22) and a zero-cross detector (24) for switching said transistors (21,22), said AC/DC-converter (1) comprises a down-converter (11) located between said rectifier (10) and converter-output (14,15) for further down-converting purposes and comprising an inductor (8) and a regulator for regulating inductor/capacitor-energies, with buffer capacitors (7,9) being present parallelly to said down-converter (11) for stabilizing purposes, to get a transformerless wallplug adapter.

## Description

The invention relates to an AC/DC-converter comprising a converter-input for receiving an AC-signal and comprising a converter-output for generating a DC-signal and comprising a rectifier coupled to said converter-input for rectifying said AC-signal.

Such an AC/DC-converter is for example a portable charger or an adapter for converting for example a 220 Volt mains or an AC-signal to for example a 5 Volt DC-signal or a 3 Volt DC-signal.

A prior art AC/DC-converter is known from US 5,805,436, which comprises said rectifier coupled to said converter-input and capacitors coupled to said converter-output and located between said rectifier and said converter-output for converting a high input voltage and a low input current to a low output voltage and a high output current.

The known AC/DC-converter is disadvantageous, inter alia, due to not being able to be used in combination with certain chip technologies, which cannot handle input voltages exceeding 100 Volt.

It is an object of the invention, inter alia, of providing an AC/DC-converter which can be integrated to a large(r) extent without thereby requiring too limited values of possible input voltages.

The AC/DC-converter according to the invention is characterised in that said AC/DC-converter comprises at least two serial voltage dividing capacitors, of which a first capacitor is coupled parallelly to an input of said rectifier, and of which a second capacitor is located between said converter-input and said first capacitor.

By introducing said first and second voltage dividing capacitors, a voltage divider has been created, thereby allowing the rectifier to be integrated without being required to limit the value of possible input voltages, due to said voltage divider taking care of a voltage reduction.

The invention is based upon an insight, inter alia, that a voltage divider in the form of a conventional transformer comprising an iron core and primary and secondary windings is heavy and inconvenient, and is based upon a basic idea, inter alia, that such a voltage divider can be replaced by a voltage divider in the form of impedances.

The invention solves the problem, inter alia, of providing a transformerless AC/DC-converter which can be integrated to a larger extent, and is advantageous, inter alia, due to being smal sized, of light weight and low costly made.

It should firstly be noted that the AC/DC-converter according to the invention does not need to comprise a conventional transformer having an iron core and windings, but that the AC/DC-converter according to the invention is not limited to transformerless AC/DC-converters, in combination with said voltage dividing capacitors, conventional transformers can still be used.

It should secondly be noted that the AC/DC-converter according to the invention can be integrated according to certain chip technologies which cannot handle input voltages exceeding 100 Volt, but that the AC/DC-converter according to the invention is not limited to these chip technologies, and further the AC/DC-converter may be integrated to a less extent or not at all.

It should thirdly be noted that the AC/DC-converter according to the invention can also be used for lower input voltages not forming any threat to certain chip technologies, and that the AC/DC-converter according to the invention can also be used for other input signals, like currents, and that the AC/DC-converter according to the invention can also generate other output signals, like currents. For example in case of receiving an input signal in the form of a current, the voltage dividing capacitors will protect the rectifier against additional (offset) voltages present at the converter-input.

A first embodiment of the AC/DC-converter according to the invention as defined in claim 2 is advantageous in that said AC/DC-converter comprises a first resistor coupled serially to said second capacitor and located between said converter-input and said first capacitor.

By introducing said first resistor, the combination of this first resistor and said second capacitor forms a filter for filtering peak signals, like peak voltages of for example 1 kVolt appearing during for example 1 microsec.

A second embodiment of the AC/DC-converter according to the invention as defined in claim 3 is advantageous in that said converter-input comprises a first input terminal and a second input terminal, with said first input terminal being coupled via a first serial circuit to a parallel circuit, and with said second input terminal being coupled via a second serial circuit to said parallel circuit, with said first serial circuit comprising said second capacitor and said first resistor, and with said parallel circuit comprising said first capacitor and said rectifier, and with said second serial circuit comprising a third capacitor and a second resisitor.

By introducing said first and second serial circuits, the converter-input is symmetric and can be used in countries not having unreversable mains connections.

A third embodiment of the AC/DC-converter according to the invention as defined in claim 4 is advantageous in that said rectifier comprises two diodes and two transistors.

By introducing said rectifier having two diodes in the positive branch and having two transistors in the negative branch, it become spossible to integrate the (bridge) rectifier together with the other circuitry into one single integrated circuit. The transistors (switches) in the negative branch avoid to have negative voltages on board of the integrated circuit below minus 0.5 Volt.

A fourth embodiment of the AC/DC-converter according to the invention as defined in claim 5 is advantageous in that said rectifier comprises a zero-cross detector for switching said transistors.

By introducing said zero-cross detector, which itself is of common general knowledge, both transistors can be controlled in such a way that the maximum output voltage of said rectifier is limited.

A fifth embodiment of the AC/DC-converter according to the invention as defined in claim 6 is advantageous in that said AC/DC-converter comprises a down-converter coupled to an output of said rectifier and said converter-output.

By introducing said down-converter, the output voltage of said rectifier can be down-converted. Thereby it should be noted that this down-converter introduces a second down-converting stage, in view of said voltage dividing capacitors being a first down-converting stage. So, the AC/DC-converter according to the invention and according to the fifth embodiment comprises at least two down-converting stages, with the second down-converting stage (and possibly further down-converting stages) being optional.

A sixth embodiment of the AC/DC-converter according to the invention as defined in claim 7 is advantageous in that said AC/DC-converter comprises a first buffer capacitor coupled parallelly to the output of said rectifier and to an input of said down-converter.

By introducing said first buffer capacitor, the output voltage of said rectifier being an input voltage for said down-converter is stabilized.

A seventh embodiment of the AC/DC-converter according to the invention as defined in claim 8 is advantageous in that said AC/DC-converter comprises a second buffer capacitor coupled parallelly to an output of said down-converter.

By introducing said second buffer capacitor, the output voltage of said down-converter being an output voltage of said AC/DC-converter is stabilized.

A eighth embodiment of the AC/DC-converter according to the invention as defined in claim 9 is advantageous in that said down-converter comprises an inductor and a regulator for regulating an inductor energy and a second buffer capacitor energy.

By introducing said inductor and said regulator, a simple, low cost, less complex down-converter has been created, of which said regulator can be entirely integrated, possibly together with said rectifier.

The invention also relates to an transformerless wallplug adapter, which is characterised in that it comprises an AC/DC-converter as defined in any one of claims 1-9.

Such a transformerless wallplug adapter is made low costly and of little weight and small sized, with a largest part (for example comprising a rectifier + down-converter excluding the inductor) being integrated and with a smaller part (for example comprising capacitors, resistors, inductor) being added in the form of external components.

It should fourthly be noted that when in the AC/DC-converter according to the invention two or more parts are coupled, they may be connected directly to each other or they may be connected indirectly to each other via a third part. And when a fourth part is located between a fifth and a sixth part, this fourth part may be connected directly to said fifth and/or sixth part, or this fourth part may be connected indirectly to said fifth and/or sixth part via a seventh and/or eighth part etc.

It should fifthly be noted that in the AC/DC-converter according to the invention an AC-signal may further comprise a DC-component, like for example an offset, and a DC-signal may further comprise an AC-component, like for example noise.

These and other aspects of the invention will be apparent from and elucidated with reference to the embodiments(s) described hereinafter.
Figure 1 illustrates in block diagram form an AC/DC-converter according to the invention comprising serial voltage dividing capacitors, a rectifier and a down-converter, and
figure 2 illustrates in block diagram form a rectifier for use in said AC/DC-converter according to the invention.

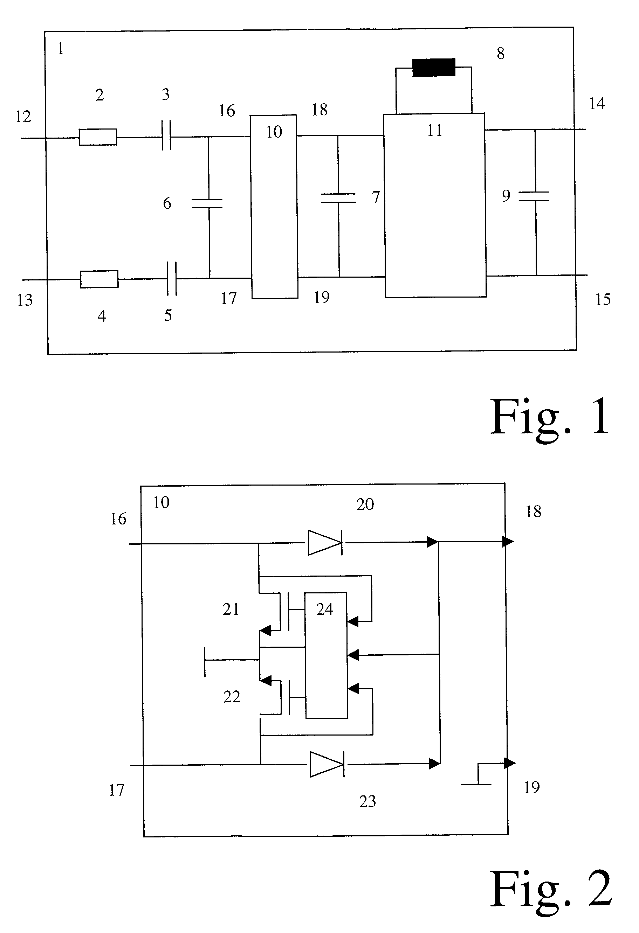

Figure 1 illustrates an AC/DC-converter 1 comprising a converter-input 12,13 having a first input terminal 12 and a second input terminal 13, a rectifier 10 and a down-converter 11. Rectifier 10 comprises an input 16,17 and an output 18,19, with a first capacitor 6 being coupled parallelly to (said input 16,17 of) said rectifier 10, and with a first buffer capacitor 7 being coupled parallelly to (said output 18,19 of) said rectifier 10 and to an input of said down-converter 11. An output of down-converter 11 is coupled to a converter output 14,15, with a second buffer capacitor 9 being coupled parallelly to said output of said down-converter 11. Down-converter 11 comprises (or is coupled to) an inductor 8 and comprises a regulator not shown. Input 16,17 of rectifier 10 comprises a first input connection 16 and a second input connection 17. Input connection 16 is coupled via a second capacitor 3 and a first resistor 2 to said first input terminal 12, and input connection 17 is coupled via a third capacitor 5 and a second resistor 4 to said second input terminal 13.

Figure 2 illustrates a rectifier 10 with input connections 16,17 and with output connections 18,19. Input connection 16 is coupled to an anode of a diode 20 and to a first serial path electrode (drain) of a MOSFET transistor 21 and to a first input of a zero-cross detector 24. A cathode of diode 20 is coupled to output connection 18 and to a second input of zero-cross detector 24. Input connection 17 is coupled to an anode of a diode 23 and to a first serial path electrode (drain) of a MOSFET transistor 22 and to a third input of a zero-cross detector 24. A cathode of diode 23 is coupled to said output connection 18 and to said second input of zero-cross detector 24. Output connection 19, zero-cross detector 24 and second serial path electrodes (sources) of transistors 21 and 22 are coupled to ground. A first output of zero-cross detector 24 is coupled to a control electrode (gate) of transistor 21, and a second output of zero-cross detector 24 is coupled to a control electrode (gate) of transistor 22.

AC/DC-converter 1 as shown in figure 1 is for example a portable charger or an adapter for converting for example a 220 Volt mains or an AC-signal to for example a 5 Volt DC-signal or a 3 Volt DC-signal, and comprises converter-input 12,13 for receiving an AC-signal and converter-output 14,15 for generating a DC-signal and rectifier 10 coupled to said converter-input 12,13 for rectifying said AC-signal.

AC/DC-converter 1 further comprises three serial voltage dividing capacitors 6,3,5, which together form a voltage divider. This allows rectifier 10 to be integrated without being required to limit the value of possible input voltages, due to said voltage divider taking care of a voltage reduction.

Resistors 2,4 respectively form in combination with capacitors 3,5 respectively filters for filtering peak signals, like peak voltages of for example 1 kVolt appearing during for example 1 microsec.

The converter-input 12,13 is symmetric and can be used in countries not having unreversable mains connections.

Rectifier 10 as shown in figure 2 comprises two diodes 20,23 and two MOSFET transistors 21,22. Due to having two diodes 20,23 in the positive branch and having two transistors 21,22 in the negative branch, the (bridge) rectifier 10 can be integrated together with the other circuitry into one single integrated circuit. The transistors (switches) 21,22 in the negative branch avoid to have negative voltages on board of the integrated circuit below minus 0.5 Volt.

Rectifier 10 further comprises a zero-cross detector 24 for switching said transistors. This zero-cross detector 24 is itself is of common general knowledge and allows both transistors 21,22 to be controlled in such a way that the maximum output voltage of said rectifier 10 is limited.

AC/DC-converter 1 as shown in figure 1 further comprises down-converter 11 coupled to an output 18,19 of said rectifier 10 and said converter-output 14,15.

By introducing said down-converter 11, the output voltage of said rectifier 10 can be down-converted. Thereby it should be noted that this down-converter 11 introduces a second down-converting stage, in view of said voltage dividing capacitors 6,3 being a first down-converting stage. So, AC/DC-converter 1 as shown in figure 1 comprises at least two down-converting stages, with the second down-converting stage (and possibly further down-converting stages) being optional.

AC/DC-converter 1 further comprises first buffer capacitor 7 coupled parallelly to the output 18,19 of said rectifier 10 and to an input of said down-converter 11 for stabilizing the output voltage of said rectifier 10 being an input voltage for said down-converter 11, and comprises second buffer capacitor 9 coupled parallelly to an output of said down-converter 11 for stabilizing the output voltage of said down-converter 11 being an output voltage of said AC/DC-converter 1.

Finally down-converter 11 further comprises an inductor 8 and a regulator for regulating an inductor energy and a second buffer capacitor energy. Of such a simple, low cost, less complex down-converter 11, said regulator can be entirely integrated, possibly together with said rectifier 10.

Said zero-cross detector 24 is of common general knownledge and for example comprises a first operational amplifier of which its inputs are coupled to said first and third input of said zero-cross detector, and for example further comprises two serial resistors located between said second input of said zero-cross detector and ground, with a common point of these serial resistors being coupled to a first input of a second operational amplifier, of which second operational amplifier a second input is coupled to a reference source. Outputs of both operational amplifiers are each coupled to inputs of two gate circuits, of which two gate circuits the outputs are coupled to the outputs of said zero-cross detector 24. Said gate circuits are for example so-called NANDs.

Said regulator in down-converter 11 for example comprises two MOSFET transistors of which the control electrodes (gates) are coupled to each other and to an output of a first gate circuit, for example a so-called invertor, and of which two transistors the first serial path electrodes (drains) are coupled to each other and to a first input connection of down-converter 11, with a second input connection being coupled to ground. A second main electrode (source) of one of said transistors is coupled to a first input of a first operational amplifier and to one side of a resistor, of which resistor the other side is coupled to the second main electrode (source) of the other transistor, to one side of inductor 8, to a first serial path electrode (drain) of a third MOSFET transistor and to a second input of said first operational amplifier via a reference source. A control electrode (gate) of said third transistor is coupled to an output of a flipflop and to an input of said first gate circuit, and a second main electrode (source) of said third transitor is coupled to ground. The other side of said inductor 8 forms a first output connection of down-converter 11, with a second output connection of down-converter 11 being coupled to ground, and this other side of inductor 8 is coupled to one side of buffer capacitor 9, of which the other side is coupled to ground, and this other side of inductor 8 is coupled to one side of two serial resistors, of which two serial resistors the other side is coupled to ground and of which two serial resistors a common point is coupled to a first input of a second operational amplifier, of which a second input is coupled to a reference source and of which an output is coupled to a first input of a second gate circuit, like for example a so-called OR, of which second gate circuit a second input is coupled to an output of said first operational amplifier and of which second gate circuit an output is coupled to an input of said flip flop.

Of course, many alternatives are possible, especially but not exclusively with respect to said zero-cross detector 24 and said regulator, without departing from the scope of this invention. For example instead of MOSFET transistors, other transistors like bipolar transistors could be used.

## Claims

1. AC/DC-converter (1) comprising a converter-input (12,13) for receiving an AC-signal and comprising a converter-output (14,15) for generating a DC-signal and comprising a rectifier (10) coupled to said converter-input (12,13) for rectifying said AC-signal, **characterised in that** said AC/DC-converter (1) comprises at least two serial voltage dividing capacitors (3,6), of which a first capacitor (6) is coupled parallelly to an input (16,17) of said rectifier (10), and of which a second capacitor (3) is located between said converter-input (12,13) and said first capacitor (6).

2. AC/DC-converter (1) according to claim 1, **characterised in that** said AC/DC-converter (1) comprises a first resistor (2) coupled serially to said second capacitor (3) and located between said converter-input (12,13) and said first capacitor (6).

3. AC/DC-converter (1) according to claim 2, **characterised in that** said converter-input (12,13) comprises a first input terminal (12) and a second input terminal (13), with said first input terminal (12) being coupled via a first serial circuit to a parallel circuit, and with said second input terminal (13) being coupled via a second serial circuit to said parallel circuit, with said first serial circuit comprising said second capacitor (3) and said first resistor (2), and with said parallel circuit comprising said first capacitor (6) and said rectifier (10), and with said second serial circuit comprising a third capacitor (5) and a second resisitor (4).

4. AC/DC-converter (1) according to claim 1, 2 or 3, **characterised in that** said rectifier (10) comprises two diodes (20,23) and two transistors (21,22).

5. AC/DC-converter (1) according to claim 4, **characterised in that** said rectifier (10) comprises a zero-cross detector (24) for switching said transistors (21,22).

6. AC/DC-converter (1) according to claim 1, 2, 3, 4 or 5, **characterised in that** said AC/DC-converter (1) comprises a down-converter (11) coupled to an output (18,19) of said rectifier (10) and said converter-output (14,15).

7. AC/DC-converter (1) according to claim 6, **characterised in that** said AC/DC-converter (1) comprises a first buffer capacitor (7) coupled parallelly to the output (18,19) of said rectifier (10) and to an input of said down-converter (11).

8. AC/DC-converter (1) according to claim 7, **characterised in that** said AC/DC-converter (1) comprises a second buffer capacitor (9) coupled parallelly to an output of said down-converter (11).

9. AC/DC-converter (1) according to claim 8, **characterised in that** said down-converter (11) comprises an inductor (8) and a regulator for regulating an inductor energy and a second buffer capacitor energy.

10. Transformerless wallplug adapter, **characterised in that** it comprises an AC/DC-converter (1) according to any one of the preceding claims.
